# EUROPEAN PATENT APPLICATION

(11) **EP 4 362 275 A1**
(43) Date of publication of application: **01.05.2024**
(21) Application number: 22828196.0
(22) Date of filing: 03.06.2022
(51) Int. Cl.: H02J 7/04, H01M 10/44, H01M 10/48

(54) **CHARGE CONTROL DEVICE AND PROGRAM**

(30) Priority: 23.06.2021 JP 2021104168
(71) Applicant: DENSO CORPORATION, Kariya-city, Aichi 448-8661 (JP); Suzuki Motor Corporation, Hamamatsu-shi, Shizuoka 432-8611 (JP)
(72) Inventor: CAO, Junmin, Kariya-city, Aichi 448-8661 (JP); OKAWACHI, Ryohei, Hamamatsu-shi, Shizuoka 432-8611 (JP); KATO, Hirotaka, Hamamatsu-shi, Shizuoka 432-8611 (JP); KOBUNA, Shingo, Hamamatsu-shi, Shizuoka 432-8611 (JP)
(74) Representative: Kuhnen & Wacker Patent- und Rechtsanwaltsbüro PartG mbB
(86) International application number: PCT/JP2022/022638
(87) International publication number: WO 2022/270278

(57) **Abstract**

A charge control device (51) is applied to a system (10) including a storage battery (30) that is chargeable and a charger (31) supplying electric power to the storage battery, and controls execution and stop of charging of the storage battery by the charger. The charge control device includes a temperature information acquisition unit that acquires temperature information of the storage battery, a calculation unit that calculates an upper limit SOC value of the storage battery to be lower as temperature of the storage battery calculated based on the temperature information is higher, a SOC information acquisition unit that acquires battery information of the storage battery, and a determination unit that determines whether a state of charge of the storage battery calculated based on the battery information has reached the upper limit SOC value, and a stop unit that, when the determination unit determines that the state of the charge has reached the upper limit SOC value, stops the charging of the storage battery by the charger until a temperature of the storage battery falls below a stop release temperature lower than a temperature of the storage battery at a time point at which the determination unit determines that the state of the charge has reached the upper limit SOC value.

## Description

### CROSS REFERENCE TO RELATED APPLICATION

This application is based on Japanese Patent Application No. 2021-104168 filed on June 23, 2021, the disclosure of which is incorporated herein by reference.

### TECHNICAL FIELD

The present disclosure relates to a charge control device and a program.

### BACKGROUND

Patent Literature 1 discloses a charge control device that is applied to a system including a rechargeable storage battery and controls execution and stop of charging of the storage battery.

### PRIOR ART LITERATURE

### PATENT LITERATURE

Patent Literature 1: JP 2015-095985 A

### SUMMARY

In a state where a temperature of a storage battery is high, the storage battery may be charged. In this case, the storage battery may deteriorate.

The present disclosure has been made to address the above issue, it is an object of the present disclosure to provide a charge control device and a program that deterioration of a storage battery can be reduced.

The present disclosure is a charge control device applied to a system including a storage battery that is chargeable and a charger supplying electric power to the storage battery, and controls execution and stop of charging of the storage battery by the charger. The charge control device includes a temperature information acquisition unit, a calculation unit, a SOC information acquisition unit, a SOC information acquisition unit, and a stop unit. The temperature information acquisition unit acquires temperature information of the storage battery. The calculation unit calculates an upper limit SOC value of the storage battery to be lower as temperature of the storage battery calculated based on the temperature information is higher. The SOC information acquisition unit acquires battery information of the storage battery. The determination unit determines whether a state of charge of the storage battery calculated based on the battery information has reached the upper limit SOC value. The stop unit, when the determination unit determines that the state of the charge has reached the upper limit SOC value, stops the charging of the storage battery by the charger until a temperature of the storage battery falls below a stop release temperature lower than a temperature of the storage battery at a time point at which the determination unit determines that the state of the charge has reached the upper limit SOC value.

In the present disclosure, the charging of the storage battery is stopped when the temperature calculated based on the battery information has reached the upper limit SOC value. The upper limit SOC value used for the determination of the stop of the charging of the storage battery is calculated to be lower as the temperature of the storage battery is higher. Accordingly, in a high temperature state in which the charging of the storage battery should be stopped, the charging of the storage battery is stopped early. After the charging of the storage battery is stopped, the charging stop state of the storage battery is continued until the temperature of the storage battery falls below the stop release temperature. The stop release temperature is set to be lower than the temperature of the storage battery at a time point at which the determination unit determines that the calculated charge of the state has reached the upper limit SOC value. Therefore, the charging stop state of the storage battery is continued until the temperature of the storage battery is sufficiently reduced. As a result, in a state where the temperature of the storage battery is high, the storage battery can be reduced from being charged, and deterioration of the storage battery can be reduced.

### BRIEF DESCRIPTION OF DRAWINGS

The above and other features and advantages of the present disclosure will become more apparent from the following detailed description made with reference to the accompanying drawings.

In the drawings:
FIG. 1 is a diagram illustrating a charge control system;
FIG. 2 is a flowchart illustrating a procedure of processing performed by a controller;
FIG. 3 is a diagram illustrating an example of a method of calculating an upper limit value;
FIG. 4 is a flowchart illustrating a procedure of processing performed by a monitoring unit;
FIG. 5 is a flowchart illustrating a procedure of processing performed by the controller; and
FIG. 6 is a time chart illustrating an example of charge control.

### DETAILED DESCRIPTION

An embodiment of a charge control device according to the present disclosure will be described below with reference to the drawings. The charge control device is applied to an electric vehicle (EV), or a plug-in hybrid vehicle (PHEV) equipped with a chargeable/dischargeable storage battery.

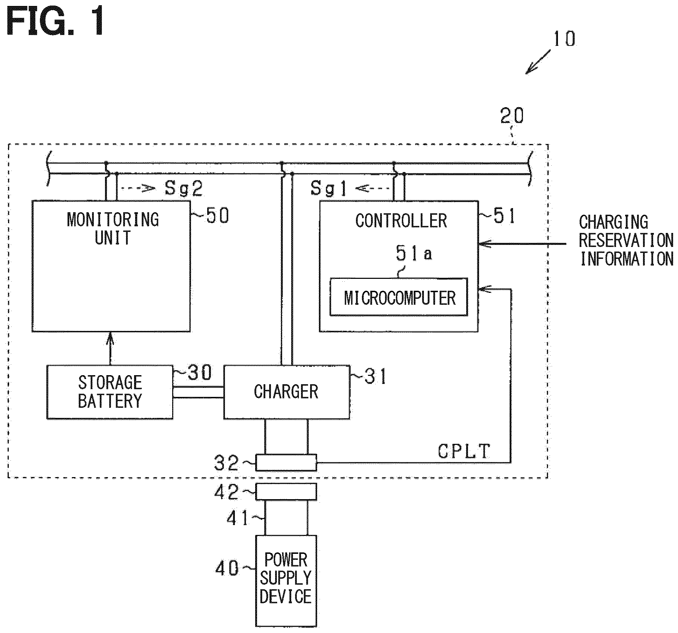

As shown in FIG. 1, a charge control system 10 includes a vehicle 20 and a power supply device 40. The vehicle 20 includes a storage battery 30 and a charger 31. The power supply device 40 is provided outside the vehicle 20.

The power supply device 40 supplies electric power to the storage battery 30 of the vehicle 20 using an external power supply as a power supply source. The external power supply is, for example, a single-phase AC commercial power supply of 100 V or a three-phase AC commercial power supply of 200 V.

The storage battery 30 is an assembled battery as a single battery by a body of battery cells connected in series, and has a terminal voltage of, for example, several hundred volts. As the battery cells, for example, a secondary battery such as a lithium ion battery can be used. The electric power supplied from the charger 31 is stored in the storage battery 30. The storage battery 30 stores electric power generated by a motor generator (not shown). The electric power stored in the storage battery 30 is used for driving a motor generator, a vehicle cabin air conditioner of the vehicle 20, and the like.

The charger 31 charges the storage battery 30 by converting the electric power of the power supply device 40 and supplying the converted electric power to the storage battery 30. For example, the charger 31 includes an AC/DC circuit that converts an AC voltage supplied from the power supply device 40 into a DC voltage, and a DC/DC circuit that transforms the converted DC voltage into a chargeable voltage of the storage battery 30.

A charging cable 41 is drawn out from the power supply device 40. A connection plug 42 is provided at a distal end of the charging cable 41.

The vehicle 20 includes a charging inlet 32. The charging inlet 32 is a power interface for supplying electric power from the power supply device 40 to the charger 31. The connection plug 42 is connected to the charging inlet 32. In this way, the charger 31 is connected to the power supply device 40 via the charging inlet 32, the connection plug 42, and the charging cable 41.

The vehicle 20 includes a monitoring unit 50 and a controller 51. The monitoring unit 50 monitors an electric current, the terminal voltage, internal resistance, a SOC, a SOH, temperature, and the like of each battery cell in the storage battery 30. "SOC" is an abbreviation for "State Of Charge". "SOH" is an abbreviation for "State Of Health".

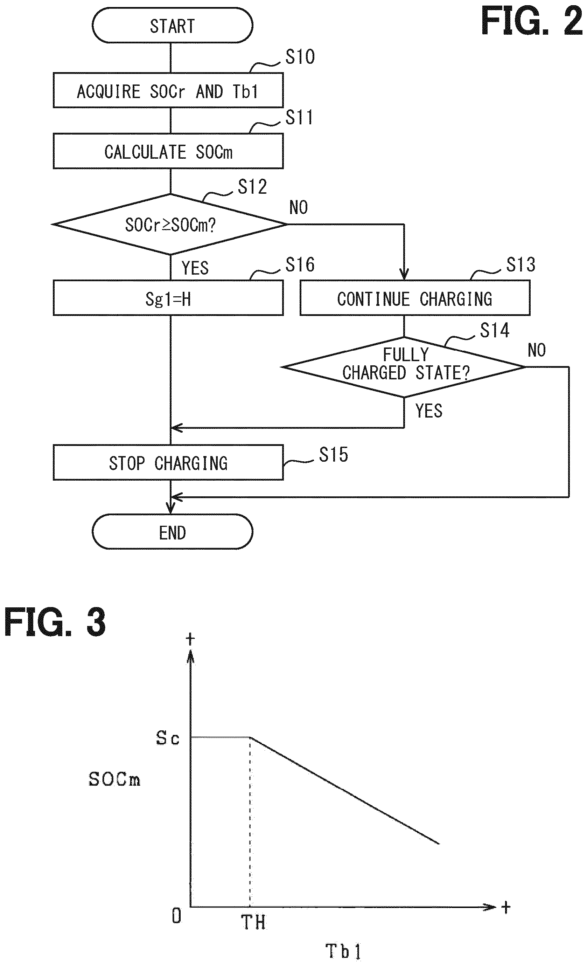

The controller 51 mainly includes a microcomputer 51a, and the microcomputer 51a includes a calculation processing device (i.e., CPU). Means and/or functions provided by the controller 51 may be provided by software recorded in a substantive memory device and a computer that can execute the software, software only, hardware only, or some combination of them. For example, suppose that the controller 51 be provided by including or using a hardware circuit serving as an electronic circuit. Such an electronic circuit may be provided by including analog circuitry and/or digital circuitry including multiple logic circuits. For example, the controller 51 executes a program stored in a non-transitory tangible storage medium serving as a storage unit included therein. The program includes, for example, a program of processing shown in FIGS. 3 to 5 and the like described later. With the execution of the program, a method corresponding to the program is executed. The storage unit is, for example, a non-volatile memory. The program stored in the storage unit may be updated via a network such as the Internet.

The controller 51 controls the charger 31 to switch between execution and stop of charging of the storage battery 30 by the charger 31. For example, when charging the storage battery 30 from the charger 31, the controller 51 drives an AC/DC circuit or a DC/DC circuit included in the charger 31. On the other hand, when the charging of the storage battery 30 by the charger 31 is stopped, the controller 51 stops the driving of the AC/DC circuit and the DC/DC circuit. As described below, the controller 51 controls the charger 31 based on a pilot signal CPLT and controls the charger 31 based on charging reservation information of a user.

The charging cable 41 is provided with an oscillator (not shown). The controller 51 controls the charger 31 based on the pilot signal CPLT generated by the oscillator. The generated pilot signal CPLT is input from the charging cable 41 to the controller 51 via the connection plug 42 and the charging inlet 32.

More specifically, based on the pilot signal CPLT, the controller 51 determines whether the connection plug 42 is connected to the charging inlet 32, and determines whether an electric-power failure state occurs in which the electric power cannot be supplied from the power supply device 40 to the charger 31. The controller 51 stops charging of the storage battery 30 by the charger 31 if it is determined that the connection plug 42 is not connected to the charging inlet 32 or if it is determined that a power failure has occurred. On the other hand, the controller 51 causes the charger 31 to charge the storage battery 30 if it is determined that the connection plug 42 is connected to the charging inlet 32 or if it is determined that the electric-power failure state has been resolved.

The controller 51 controls the charger 31 based on the charging reservation information of the user in a state where the connection plug 42 is connected to the charging inlet 32. The user inputs the charging reservation information to the controller 51 of the vehicle 20 using a portable communication device such as a mobile phone. The charging reservation information of the user includes a desired charging date and time, a charging amount, a charging time, and the like. The controller 51 stops charging of the storage battery 30 by the charger 31 until charging start time calculated based on the charging reservation information of the user elapses, and performs charging of the storage battery 30 by the charger 31 when the charging start time elapses.

The charging reservation information of the user may include driving start time of the vehicle cabin air conditioner. In this case, the controller 51 stops charging of the storage battery 30 from the charger 31 until the drive start time of the vehicle cabin air conditioner has elapsed, and charges the storage battery 30 from the charger 31 when the drive start time has elapsed.

The controller 51 communicates with the charger 31 and the monitoring unit 50. More specifically, the controller 51 communicates with the charger 31 and the monitoring unit 50 via a communication network such as a CAN, and can share various data with each other. Thereby, the controller 51 controls the charger 31 and acquires the SOC and the temperature of each battery cell in the storage battery 30. Further, the monitoring unit 50 acquires information on whether the controller 51 is activated.

The battery cells in the storage battery 30 may deteriorate due to charging of the storage battery 30 by the charger 31 and due to the SOC of the storage battery 30 becoming high. For example, a state in which the SOC of the storage battery 30 is high is a state in which the SOC of the storage battery 30 is 80% to 100%.

The deterioration of the battery cell is more likely to occur in a state where the temperature of the storage battery 30 is high than in a state where the temperature of the storage battery 30 is low. For example, the state where the temperature of the storage battery 30 is low is a state where the temperature of the storage battery 30 is around 30 degrees, and the state where the temperature of the storage battery 30 is high is a state where the temperature of the storage battery 30 is around 60 degrees.

In the state where the temperature of the storage battery 30 is high, charging of the storage battery 30 by the charger 31 may be performed. For example, the storage battery 30 may be charged before the temperature of the storage battery 30 increases and the increased temperature decreases during traveling of the vehicle 20. In this case, there is a possibility that the battery cells in the storage battery 30 deteriorate.

In the present embodiment, the vehicle 20 does not include an actuator for cooling the storage battery 30. Examples of the actuator include a fan that controls flow of air for air-cooling the storage battery 30 and a pump that circulates cooling water for water-cooling the storage battery 30. In this case, it takes time for the temperature of the storage battery 30 to transition from a high state to a low state. Therefore, in a state where the temperature of the storage battery 30 is high, there is a high possibility that charging of the storage battery 30 by the charger 31 is performed.

Therefore, in the present embodiment, charging of the storage battery 30 by the charger 31 is limited in a state where the temperature of the storage battery 30 is high. More specifically, an upper limit value SOCm is calculated based on the temperature of the storage battery 30, and when the SOC of the storage battery 30 reaches the calculated upper limit value SOCm, charging of the storage battery 30 by the charger 31 is stopped. The upper limit value SOCm corresponds to an "upper limit SOC value".

FIG. 2 shows a procedure of a charging control process of the charger 31 executed by the controller 51. This process is repeatedly performed in a predetermined cycle.

In step S10, the SOC and the temperature of each battery cell in the storage battery 30 are acquired. The SOC is SOC information or battery information. In the present embodiment, the controller 51 calculates a maximum value of the acquired SOCs as a comparison value SOCr. The controller 51 calculates the maximum value of the acquired temperatures as a battery temperature Tb1. In the present embodiment, step S10 corresponds to an "SOC information acquisition unit" and a "temperature information acquisition unit".

In step S11, the upper limit value SOCm is calculated based on the battery temperature Tb1. FIG. 3 shows an example of a method of calculating the upper limit value SOCm. The controller 51 sets the upper limit value SOCm to a predetermined value Sc when the battery temperature Tb1 is lower than a temperature threshold TH. In this case, charging of the storage battery 30 by the charger 31 is performed until the SOC of the storage battery 30 reaches the predetermined value Sc. The predetermined value Sc is a value at which the SOC of the storage battery 30 is in a high state, and is, for example, 80% to 100%. The temperature threshold TH is, for example, 30 degrees. On the other hand, the controller 51 calculates the upper limit value SOCm to be lower as the battery temperature Tb1 is higher when the battery temperature Tb1 is higher than or equal to the temperature threshold TH. In this case, charging of the storage battery 30 by the charger 31 is performed until the upper limit value SOCm lower than the predetermined value Sc is reached. Therefore, charging of the storage battery 30 by the charger 31 is stopped before the SOC of the storage battery 30 becomes high.

The controller 51 may calculate the upper limit value SOCm using correspondence information (for example, map information or mathematical expression information) in which the battery temperature Tb1 among the temperatures of the respective battery cells is associated with the upper limit value SOCm in advance. In the present embodiment, step S11 corresponds to a "calculator".

Returning to the description of FIG. 2, in step S12, it is determined whether the comparison value SOCr has reached the upper limit value SOCm. More specifically, when it is determined that the comparison value SOCr is less than the upper limit value SOCm, the process proceeds to step S13. On the other hand, when determining that the comparison value SOCr is equal to or greater than the upper limit value SOCm, the process proceeds to step S16. In the present embodiment, step S12 corresponds to an "SOC determination unit".

In step S13, charging of the storage battery 30 by the charger 31 is continued. In step S14, it is determined whether the storage battery 30 is in a fully charged state. The electric current and voltage of each battery cell may be used to determine whether the battery cell is in the fully charged state. When it is determined in step S14 that the storage battery 30 is not in the fully charged state, the present process is terminated. On the other hand, when it is determined in step S14 that the storage battery 30 is in the fully charged state, the process proceeds to step S15. In step S15, charging of the storage battery 30 by the charger 31 is stopped.

In step S16, a logical value of a first signal Sg1 is switched from "Low" to "High". The first signal Sg1 indicates that there is no temperature monitoring request for each battery cell in the storage battery 30 based on the logical value High, and indicates that there is a temperature monitoring request based on the logical value High. Therefore, by notifying the monitoring unit 50 of the first signal Sg1 of the logical value High, it is notified that there is a temperature monitoring request for each battery cell in the storage battery 30. Then, the process proceeds to step S15. According to the present embodiment, the processes of steps S12 and S15 correspond to a "stopping unit".

When the logical value of the first signal Sg1 is switched from Low to High, the controller 51 shifts to a sleep mode. The sleep mode is a state in which electric power consumed by the controller 51 can be minimized and the controller 51 can be quickly activated when an activation request is made.

The monitoring unit 50 switches to an intermittent activation mode when it is detected that the first signal Sg1 of logical value High is reported by the controller 51. The intermittent activation mode is a state in which the monitoring unit 50 is activated by itself at predetermined time intervals in order to reduce electric power consumed by the monitoring unit 50. For example, the monitoring unit 50 is activated every 1 hour in the intermittent activation mode.

Next, an operation of the monitoring unit 50 in the intermittent activation mode will be described.

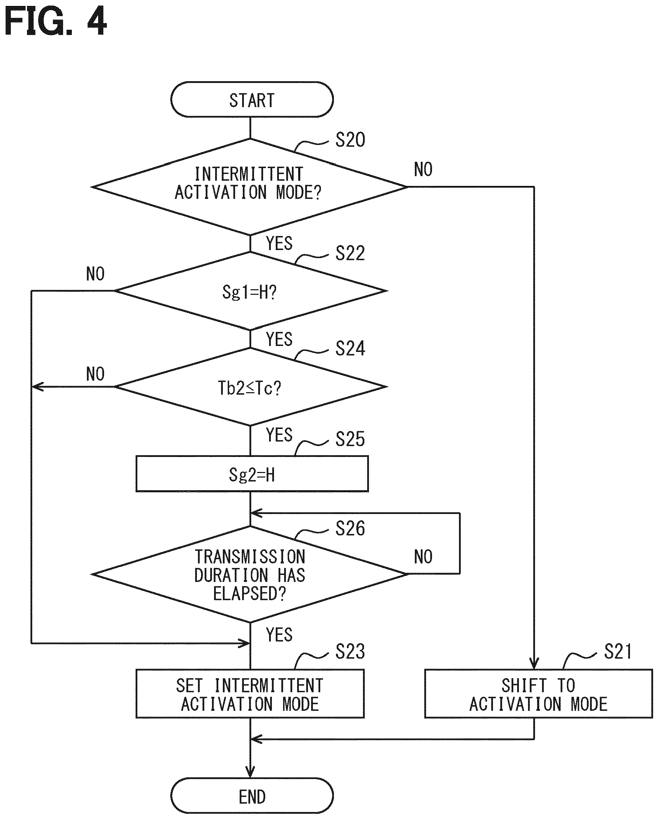

FIG. 4 shows a procedure of processing performed by the monitoring unit 50 in the intermittent activation mode. This process is repeatedly performed in a predetermined cycle.

In step S20, it is determined whether or not the intermittent activation mode is set. For example, determination of whether an operation mode is the intermittent activation mode is performed by determining whether the controller 51 has already been activated. When the controller 51 has already been activated, it is determined that the controller has not been activated by itself, and it is determined that the mode is not the intermittent activation mode. On the other hand, when the controller 51 has not been activated yet, it is determined that the controller 51 has been activated by itself, and it is determined that the monitoring unit 50 is in the intermittent activation mode.

When a negative determination is made in step S20, the process proceeds to step S21. In step S21, the monitoring unit 50 shifts to the activation mode. In the activation mode, the monitoring unit 50 constantly monitors the electric current, the terminal voltage, the SOC, the SOH, the temperature, and the like of each battery cell in the storage battery 30.

On the other hand, when an affirmative determination is made in step S20, the process proceeds to step S22. In step S22, it is determined whether the logical value of the first signal Sg1 is High. When it is determined that the logical value of the first signal Sg1 is High, it is determined that there is a temperature monitoring request for each battery cell in the storage battery 30. On the other hand, when it is determined that the logical value of the first signal Sg1 is Low, it is determined that there is no temperature monitoring request for each battery cell in the storage battery 30.

When a negative determination is made in step S22, the process proceeds to step S23. In step S23, the intermittent activation mode is set, and the present process is terminated. In this case, the monitoring unit 50 is activated by itself after a predetermined time has elapsed, and performs the process of step S20 again.

On the other hand, when an affirmative determination is made in step S22, the process proceeds to step S24. In step S24, the temperature of each battery cell is detected, and the maximum value of the detected temperatures of the battery cells is set as a monitoring temperature Tb2. In step S24, it is determined whether the monitored temperature Tb2 is equal to or lower than a stop release temperature Tc. For example, the stop release temperature Tc is a temperature equal to or lower than the temperature threshold TH. When a negative determination is made in step S24, the process proceeds to step S23. On the other hand, when an affirmative determination is made in step S24, the process proceeds to step S25.

In step S25, a logical value of a second signal Sg2 is switched from "Low" to "High". The second signal Sg2 indicates that there is no charging restart request from the charger 31 to the storage battery 30 based on the logical value Low, and indicates that there is a charging restart request based on the logical value High. Therefore, by switching the logical value of the second signal Sg2 from Low to High, the controller 51 is notified that there is a request to resume charging of the storage battery 30 by the charger 31. In step S26, it is determined whether a transmission duration of the second signal Sg2 has elapsed. That is, in the transmission duration, the notification of the second signal Sg2 by the logical value High is continued to the controller 51. When the transmission duration of the second signal Sg2 has elapsed, the process proceeds to step S23. The controller 51 is activated by the notification of the second signal Sg2 based on the logical value High.

Next, an operation of the controller 51 when restarting the charging of the storage battery 30 by the charger 31 will be described.

The controller 51 determines whether activation has been performed based on the logical value of the second signal Sg2 to High. The controller 51 determines that there is a request for resuming the charging of the storage battery 30 from the charger 31 when it is determined that the activation has been performed based on the logical value of the second signal Sg2 to High. In this case, the controller 51 resumes charging of the storage battery 30 by the charger 31. On the other hand, the controller 51 determines that there is no request to resume charging of the storage battery 30 by the charger 31 when it is determined that the activation is not carried out by setting the logical value of the second signal Sg2 to High. In this case, the controller 51 shifts to the sleep mode and continues the stop state of charging of the storage battery 30 by the charger 31.

In the present embodiment, since the vehicle 20 does not include an actuator for cooling the storage battery 30, the temperature of the storage battery 30 is gradually reduced due to heat dissipation to an outside. Therefore, it may take some time point to resume charging the storage battery 30 when the charging of the storage battery 30 by the charger 31 is stopped. In this case, charging of the storage battery 30 may be requested by the user. Therefore, in the present embodiment, even when it is determined that there is no request from the charger 31 to resume charging of the storage battery 30, the controller 51 is activated and charging of the storage battery 30 is resumed when there is a charging request from the user.

For example, the charging request from the user includes reconnection of the connection plug 42 already connected to the charging inlet 32 and input of the charging reservation information. In this case, the controller 51 implements the charging of the storage battery 30 by the charger 31.

An electric-power failure state may occur in which electric power cannot be supplied from the power supply device 40 to the charger 31. The pilot signal CPLT indicating that the electric-power failure state is resolved is generated and the controller 51 is activated when the electric-power failure state that has occurred is resolved. In this case, after the charging of the storage battery 30 from the charger 31 is stopped, the charging of the storage battery 30 is resumed before the charging is resumed due to the temperature of the storage battery 30 falling below the stop release temperature Tc.

Therefore, in the present embodiment, the controller 51 determines whether the monitoring unit 50 was notified that there was a request to monitor the temperature of each battery cell before the power failure when it is determined that the electric-power failure state has been resolved. In the present embodiment, the controller 51 determines whether the logical value of the first signal Sg1 is High in a communication history with the monitoring unit 50. The controller 51 determines that there is no request to monitor the temperature of each battery cell before the power failure when it is determined that the logical value of the first signal Sg1 before the power failure is Low. In this case, the controller 51 implements the charging of the storage battery 30 by the charger 31. On the other hand, the controller 51 determines that there was a request to monitor the temperature of each battery cell before the power failure when it is determined that the logical value of the first signal Sg1 before the power failure is High. In this case, the controller 51 continues to stop charging the storage battery 30 from the charger 31.

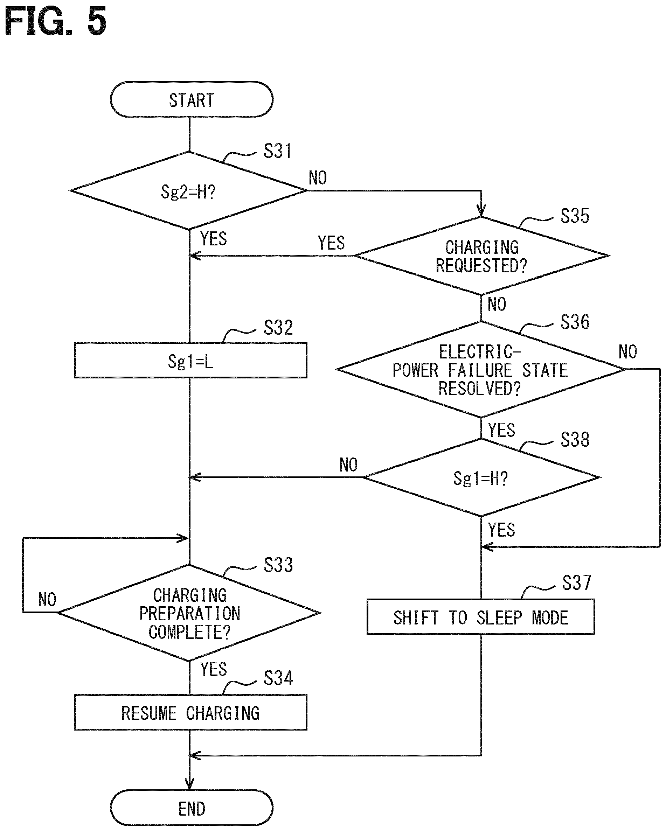

FIG. 5 shows a procedure of processing in which the controller 51 resumes charging of the storage battery 30 from the charger 31. This process is repeatedly performed in a predetermined cycle.

In step S31, it is determined whether activation has been performed by setting the logical value of the second signal Sg2 to High. When an affirmative determination is made in step S31, the process proceeds to step S32. In step S32, the logical value of the first signal Sg1 is switched from High to Low. As a result, the request for monitoring the temperature of each battery cell in the storage battery 30 is withdrawn. In this case, the current, the monitoring unit 50 constantly monitors the electric current, the terminal voltage, the SOC, the SOH, the temperature, and the like of each battery cell in the storage battery 30.

In step S33, it is determined whether preparation for restarting charging of the storage battery 30 is completed. For example, when the electric-power failure state in which electric power cannot be supplied from the power supply device 40 to the charger 31 occurs, charging of the storage battery 30 cannot be resumed, and thus the process waits until the electric-power failure state is resolved. When the electric-power failure state is resolved, it is determined that preparation for restarting charging of the storage battery 30 is completed. In step S34, charging of the storage battery 30 is resumed.

On the other hand, when a negative determination is made in step S31, the process proceeds to step S35. In step S35, it is determined whether activation has been performed by receiving a charging request from the user. When an affirmative determination is made in step S35, the process proceeds to step S32. In this case, after step S33, charging of the storage battery 30 is resumed in step S34. In the present embodiment, the processing from step S31 to step S35 corresponds to a "charging restart unit".

On the other hand, when a negative determination is made in step S35, the process proceeds to step S36. In step S36, it is determined whether activation has been performed by resolving the electric-power failure state. When a negative determination is made in step S36, the process proceeds to step S37. In step S37, the controller 51 shifts to the sleep mode. On the other hand, when an affirmative determination is made in step S36, the process proceeds to step S38. In the present embodiment, the process of step S36 corresponds to a "first determination unit".

In step S38, it is determined whether the logical value of the first signal Sg1 is High in the communication history with the monitoring unit 50. When a negative determination is made in step S38, the process proceeds to step S33. In this case, after step S33, charging of the storage battery 30 is resumed in step S34. On the other hand, when an affirmative determination is made in step S38, the process proceeds to step S37. In this case, the charging of the storage battery 30 is continuously stopped. In the present embodiment, the process of step S38 corresponds to a "second determination unit".

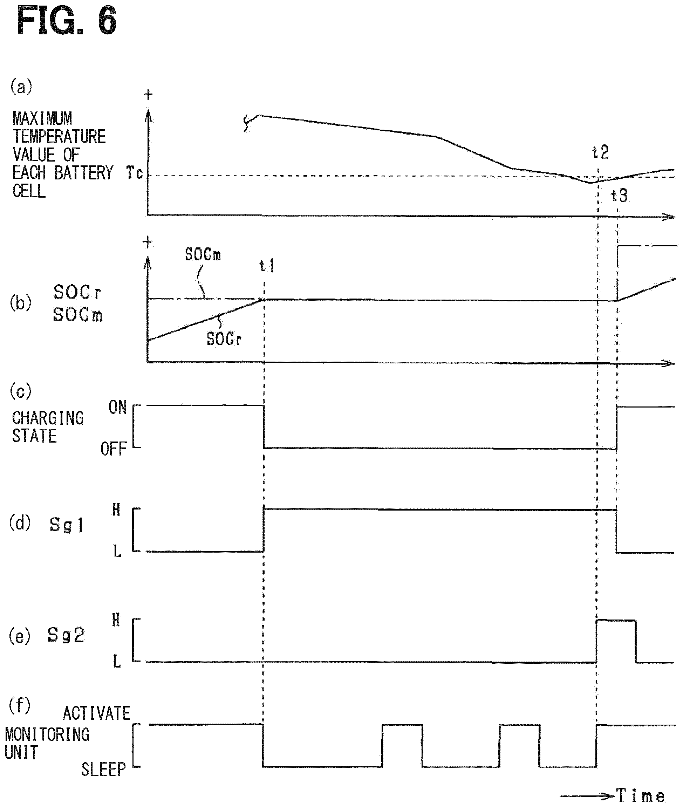

FIG. 6 shows an example of the charging control. FIG. 6 shows a case where charging is resumed when the temperature of the battery cell falls below the stop release temperature Tc after charging of the storage battery 30 is stopped. In FIG. 6, (a) shows transition of the maximum value of the temperature of each battery cell, (b) shows transition of the comparison value SOCr and the upper limit value SOCm, (c) shows state of charge of the storage battery 30, (d) shows transition of the first signal Sg1, (e) shows transition of the second signal Sg2, and (f) shows a state of the monitoring unit 50.

At time point t1, the comparison value SOCr reaches the upper limit value SOCm calculated by the process of step S11. Accordingly, the affirmative determination is made in the process of step S12. Therefore, the logical value of the first signal Sg1 is switched from Low to High in the process of step S16, and the charging of the storage battery 30 is stopped in the process of step S15. After time point t1, the monitoring unit 50 is set to the intermittent activation mode.

At time point t2, the monitoring unit 50 is activated by itself to monitor the temperature of each battery cell. At time point t2, the maximum value of the temperatures of the battery cells falls below the stop release temperature Tc, and the affirmative determination is made in the process of step S24. Accordingly, the logical value of the second signal Sg2 is switched from Low to High in the process of step S25.

At time point t3, the first signal Sg1 is switched from High to Low in the process of step S32. At time point t3, the upper limit value SOCm is calculated in the process of step S11. In this case, since the battery temperature Tb1 at time point t3 is lower than the temperature of each battery cell at time point t1, the upper limit value SOCm at time point t3 is higher than the upper limit value SOCm at time point t1. Therefore, even when charging of the storage battery 30 is resumed in the process of step S34, the affirmative determination is not made again in the process of step S12.

According to the present embodiment described in detail above, the following effects can be obtained.

The charging of the storage battery 30 is stopped when the comparison value SOCr reaches the upper limit value SOCm. The upper limit value SOCm used to determine whether to stop charging the storage battery 30 is calculated to be lower as the battery temperature Tb1 is higher. Accordingly, in a high temperature state in which the charging of the storage battery 30 should be stopped, the charging of the storage battery 30 is stopped early. After the charging of the storage battery 30 is stopped, the charging stop state of the storage battery 30 is continued until the monitored temperature Tb2 falls below the stop release temperature Tc. The stop release temperature Tc is set to be lower than the temperature of the storage battery 30 at a time when it is determined that the comparison value SOCr has reached the upper limit value SOCm. Therefore, the charging stop state of the storage battery 30 is continued until the temperature of the storage battery 30 is sufficiently reduced. As a result, in a state where the temperature of the storage battery 30 is high, the storage battery 30 can be reduced from being charged, and deterioration of the battery cells in the storage battery 30 can be reduced.

The charging of the storage battery 30 is resumed on condition that the monitored temperature Tb2 falls below the stop release temperature Tc. In this case, since the temperature of the storage battery 30 is sufficiently reduced, there is a low possibility that deterioration of the battery cells in the storage battery 30 is promoted even when charging of the storage battery 30 is resumed. Therefore, the charging of the storage battery 30 can be resumed while reducing deterioration of each battery cell.

The charging of the storage battery 30 is resumed even if the temperature of the monitoring temperature Tb2 is before a time point at which the temperature falls below the stop release temperature Tc when there is a charging request from the user. As a result, the storage battery 30 can be charged by giving priority to the charging request of the user.

The controller 51 determines whether the logical value of the first signal Sg1 is High based on the communication history between the monitoring unit 50 and the controller 51 when it is determined that the controller 51 has been activated due to the resolution of the electric-power failure state. The charging of the storage battery 30 is resumed when the controller 51 determines that the logical value of the first signal Sg1 is Low. On the other hand, the charging of the storage battery 30 is not resumed when the controller 51 determines that the logical value of the first signal Sg1 is High. Therefore, the occurrence of a situation in which the charging of the storage battery 30 is resumed even though the monitoring temperature Tb2 is not lower than the stop release temperature Tc in the charging stop state of the storage battery 30 can be reduced.

### Other Embodiments

The above embodiments may be changed and carried out as follows.

In the process of step S10, instead of the SOC of each battery cell in the storage battery 30, for example, the electric current, the terminal voltage, and the internal resistance of each battery cell may be acquired as SOC information. In this case, the comparison value SOCr, which is the maximum value among the SOCs of the battery cells, may be calculated based on the acquired SOC information.

For example, an estimation method based on an open circuit voltage (OCV), or a calculation method based on electric current integration may be used to calculate the SOC. In the estimation method based on the open circuit voltage, the open circuit voltage of each battery cell is acquired, and the SOC is estimated using a map representing a correspondence relationship between the acquired open circuit voltage and the SOC. In the calculation method based on the electric current integration, the SOC is calculated by acquiring the charge/discharge current flowing through each battery cell and performing calculation processing on the acquired charge/discharge current. When the SOC is calculated by these methods, the internal resistance may be considered as a parameter for estimating degree of deterioration of each battery cell.

In the process of step S10, other temperature information may be acquired instead of the temperature of each battery cell in the storage battery 30. In this case, the temperature of each battery cell in the storage battery 30 may be estimated based on the acquired temperature information. Various temperature estimation means can be employed for estimating the temperature.

In the process of step S10, instead of acquiring the maximum value of the temperatures of the battery cells as the battery temperature Tb1, an average value of the temperatures of the battery cells may be acquired.

In the process of step S10, instead of acquiring the maximum value of the SOCs of the battery cells as the comparison value SOCr, an average value of the SOCs of the battery cells may be acquired.

In the process of step S24, instead of using the maximum value of the detected temperatures of the respective battery cells as the monitoring temperature Tb2, an average value of the detected temperatures of the respective battery cells may be used.

The storage battery 30 may not constitute an assembled battery.

The vehicle 20 may include an actuator for cooling the storage battery 30.

The charge control system 10 is not limited to a vehicle, and may be applied to, for example, an aircraft or a ship. The charge control system 10 is not limited to a moving body such as a vehicle, an aircraft, or a ship, and may be applied to another moving body.

The control units and methods thereof described in the present disclosure may be implemented by a dedicated computer including a processor programmed to execute one or more functions embodied by a computer program and a memory. Alternatively, the control unit and the method described in the present disclosure may be realized by a dedicated computer provided by configuring a processor with one or more dedicated hardware logic circuits. Alternatively, the controller and the method described in the present disclosure may be implemented by one or more special purpose computer, which is configured as a combination of a processor and a memory, which are programmed to perform one or more functions, and a processor which is configured with one or more hardware logic circuits. A computer program may be stored in a computer-readable non-transitory tangible recording medium as an instruction executed by a computer.

Although the present disclosure has been described in accordance with the examples, it is understood that the present disclosure is not limited to such examples or structures. The present disclosure encompasses various modifications and variations within the scope of equivalents. In addition, various combinations and modes, and other combinations and modes including only one element, more elements, or less elements are also within the scope and idea of the present disclosure.

## Claims

1. A charge control device (51) applied to a system (10) including a storage battery (30) that is chargeable and a charger (31) supplying electric power to the storage battery, and configured to control execution and stop of charging of the storage battery by the charger, the charge control device comprising:
a temperature information acquisition unit configured to acquire temperature information of the storage battery;
a calculation unit configured to calculate an upper limit SOC value of the storage battery to be lower as temperature of the storage battery calculated based on the temperature information is higher;
a SOC information acquisition unit configured to acquire battery information of the storage battery;
a determination unit configured to determine whether a state of charge of the storage battery calculated based on the battery information has reached the upper limit SOC value; and
a stop unit configured to, when the determination unit determines that the state of the charge has reached the upper limit SOC value, stop the charging of the storage battery by the charger until a temperature of the storage battery falls below a stop release temperature lower than a temperature of the storage battery at a time point at which the determination unit determines that the state of the charge has reached the upper limit SOC value.

2. The charge control device according to claim 1, further comprising
a charge restart unit configured to restart the charging of the storage battery on a condition that the temperature of the storage battery is lower than the stop release temperature after the charging of the storage battery is stopped by the stop unit.

3. The charge control device according to claim 2, wherein
the charging restart unit is configured to restart the charging of the storage battery when the determination unit determines that there is a charging request from a user before a time point at which the temperature of the storage battery falls below the stop release temperature after the charging of the storage battery is stopped by the stop unit.

4. The charge control device according to claim 2 or 3, further comprising:
a first determination unit configured to determine whether an electric-power failure state in which electric power cannot be supplied from the charger to the storage battery has been resolved; and
a second determination unit configured to determine whether the charging has been stopped by the stop unit when the first determination unit determines that the electric-power failure state has been resolved; wherein
the charging restart unit is configured to restart the charging of the storage battery when the second determination unit determines that the charging has not been stopped, and
the charging restart unit is configured not to restart the charging of the storage battery when the second determination unit determines that the charging has been stopped.

5. A program applied to a charge control device (51) including a computer (51a) configured to control execution and stop of charging of a storage battery (30) by a charger (31), the program causes the computer to function as:
a temperature information acquisition unit configured to acquire temperature information of the storage battery;
a calculation unit configured to calculate an upper limit SOC value of the storage battery to be lower as temperature of the storage battery calculated based on the temperature information is higher;
a SOC information acquisition unit configured to acquire battery information of the storage battery;
a determination unit configured to determine whether a state of charge of the storage battery calculated based on the battery information has reached the upper limit SOC value; and
a stop unit configured to, when the determination unit determines that the state of the charge has reached the upper limit SOC value, stop the charging of the storage battery by the charger until a temperature of the storage battery falls below a stop release temperature lower than a temperature of the storage battery at a time point at which the determination unit determines that the state of the charge has reached the upper limit SOC value.
